# EUROPÄISCHE PATENTSCHRIFT

(11) **EP 3 555 466 B1**
(45) Veröffentlichungstag und Bekanntmachung des Hinweises auf die Patenterteilung: **01.05.2024**
(21) Anmeldenummer: 17837950.9
(22) Anmeldetag: 15.12.2017
(51) Int. Cl.: F03D 80/40

(54) **VORRICHTUNG UND VERFAHREN ZUM ERKENNEN DER ANLAGERUNG VON EIS AN EINER STRUKTUR EINES BAUWERKS**
DEVICE AND METHOD FOR RECOGNISING THE ATTACHMENT OF ICE TO A STRUCTURE OF A CONSTRUCTION
DISPOSITIF ET PROCÉDÉ DE DÉTECTION DE L'ACCUMULATION DE GLACE À UNE STRUCTURE D'UN OUVRAGE DE CONSTRUCTION

(30) Priorität: 15.12.2016 DE 102016124554
(43) Veröffentlichungstag der Anmeldung: 23.10.2019
(73) Patentinhaber: VC VIII Polytech Holding ApS, 6740 Bramming (DK)
(72) Erfinder: MÜLLER, Mathias, 82194 Gröbenzell (DE)
(74) Vertreter: Zacco Denmark A/S
(86) Internationale Anmeldenummer: PCT/EP2017/083088
(87) Internationale Veröffentlichungsnummer: WO 2018/109180

(56) Entgegenhaltungen:
- DE-A1-102014 117 918

## Beschreibung

### TECHNISCHES GEBIET

Ausführungsformen der vorliegenden Offenbarung betreffen eine Vorrichtung und ein Verfahren zum Erkennen der Anlagerung von Eis an einer Struktur eines Bauwerks.

Strukturen von Bauwerken sind den Witterungsbedingungen der Umgebung ungeschützt ausgesetzt. Ein Beispiel für eine Struktur ist ein Rotorblatt an einer Windenergieanlage. An bestimmten Standorten kann bei entsprechend niedrigen Umgebungstemperaturen und ausreichend hoher Luftfeuchte bzw. bei auftretendem Niederschlag Eis an den Strukturen, z. B. den Rotorblättern, angelagert werden. Mit zunehmender Größe der Strukturen wie z. B. der Rotorblätter von Windkraftanlagen nimmt deren Oberfläche zu, so dass auch die Gefahr zur Anlagerung von Eis, d. h. der Ausbildung eines Eisansatzes an den Strukturen, zunimmt.

Eisanlagerungen stellen einerseits eine potentielle Gefahr für die Umgebung des Bauwerks dar, da bei einem Abwurf des Eisansatzes - z. B. im rotierenden Betrieb einer Windenergieanlage - die abgeworfenen Eisstücke Personen und Gegenstände im Abwurfradius gefährden können. Andererseits kann sich insbesondere bei ungleichmäßiger Anlagerung von Eis auch eine Unwucht des Rotors der Windkraftanlage ergeben, was im Betrieb der Windkraftanlage zu Schäden führen kann.

### STAND DER TECHNIK

Es sind Vorrichtungen und Verfahren zum Erkennen der Anlagerung von Eis an Rotorblättern von Windenergieanlagen bekannt. Manche bekannten Vorrichtungen und Verfahren werten die Signale eines Beschleunigungssensors aus, der an dem Rotorblatt oder im Bereich des Rotorblatts montiert ist, um auf eine mögliche Anlagerung von Eis zu schließen.

Die Masse von angelagertem Eis kann relativ klein im Verhältnis zur Masse eines Rotorblatts sein. Die Genauigkeit oder Auflösung eines Beschleunigungssensors bzw. des zugehörigen Auswertungsverfahrens ist daher begrenzt.

Es soll daher eine Lösung angegeben werden, bei welcher eine Anlagerung von Eis an einer Struktur eines Bauwerks zuverlässiger oder genauer erkannt werden kann.

Dokument DE 10 2014 117918 A1 betrifft ein Verfahren zur individuellen Pitchregelung von Rotorblättern einer Windkraftanlage.

### ZUSAMMENFASSUNG

Ausführungsformen der vorliegenden Offenbarung stellen eine Vorrichtung zum Erkennen der Anlagerung von Eis an einer Struktur eines Bauwerks gemäß Anspruch 1 bereit. Weitere Ausführungsformen der vorliegenden Offenbarung geben ein Verfahren zum Erkennen der Anlagerung von Eis an einer Struktur eines Bauwerks gemäß Anspruch 10 an.

Gemäß einer Ausführungsform wird eine Vorrichtung zum Erkennen der Anlagerung von Eis an einer Struktur eines Bauwerks angegeben, wobei die Vorrichtung mindestens einen Beschleunigungssensor umfasst, der angeordnet und konfiguriert ist zum Erfassen einer Beschleunigung an der Struktur, wobei die Vorrichtung eine Auswerteeinrichtung zum Ermitteln mindestens einer Eigenfrequenz der Struktur aus der erfassten Beschleunigung umfasst, wobei die Auswerteeinrichtung zum indirekten Detektieren einer Anlagerung von Eis an der Struktur anhand der ermittelten mindestens einen Eigenfrequenz der Struktur konfiguriert ist, und wobei die Vorrichtung mindestens einen Eis-Detektionssensor umfasst, der angeordnet und konfiguriert ist zum direkten Detektieren der Anlagerung von Eis an einer Position an der Struktur, wobei die Auswerteinrichtung das indirekte Detektieren der Anlagerung von Eis und das direkte Detektieren der Anlagerung von Eis kombiniert.

Gemäß einer weiteren Ausführungsform wird ein Verfahren zum Erkennen der Anlagerung von Eis an einer Struktur eines Bauwerks angegeben, wobei das Verfahren ein Erfassen einer Beschleunigung an der Struktur, ein Ermitteln mindestens einer Eigenfrequenz der Struktur aus der erfassten Beschleunigung, ein indirektes Detektieren einer Anlagerung von Eis an der Struktur anhand der ermittelten mindestens einen Eigenfrequenz der Struktur, ein direktes Detektieren der Anlagerung von Eis an einer Position an der Struktur und ein Bestimmen, ob oder ob nicht eine Eisanlagerung vorliegt, aus einer Kombination des direkten Detektionsergebnisses und des indirekten Detektionsergebnisses umfasst.

Weitere Aspekte und Merkmale ergeben sich beispielsweise aus den Merkmalen der abhängigen Ansprüche.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
- Fig. 1: ein schematisches Blockschaltbild einer Vorrichtung zum Erkennen der Anlagerung von Eis an einer Struktur eines Bauwerks gemäß einer Ausführungsform;
- Fig. 2: eine schematische Darstellung einer Windkraftanlage, bei welcher die Vorrichtung gemäß einer der hierin beschriebenen Ausführungsformen zum Einsatz kommen kann; und
- Fig. 3: ein Ablaufdiagramm eines Verfahrens zum Erkennen der Anlagerung von Eis an einer Struktur eines Bauwerks gemäß einer Ausführungsform.

Nachstehend werden Ausführungsformen näher erläutert. Die Zeichnungen dienen der Veranschaulichung eines oder mehrerer Beispiele von Ausführungsformen der Erfindung.

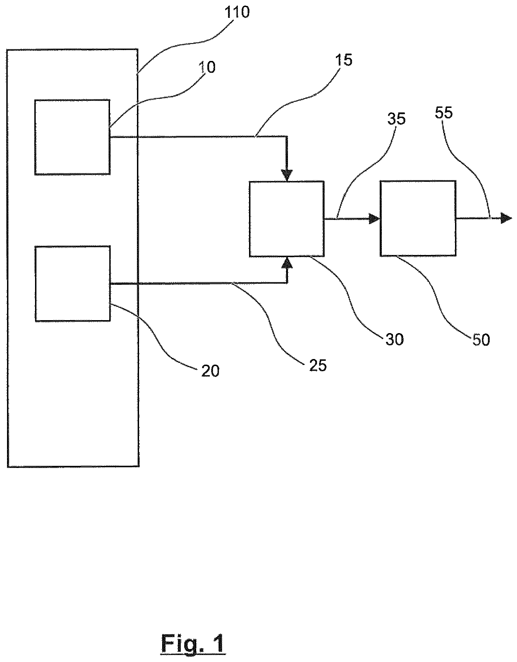

Fig. 1 zeigt schematisch ein Blockschaltbild einer Vorrichtung zum Erkennen der Anlagerung von Eis an einer Struktur 110 eines Bauwerks gemäß einer Ausführungsform. Typischerweise ist die Struktur 110 des Bauwerks relativ zu einem Fundament des Bauwerks oder dergleichen beweglich, beispielsweise um eine Achse rotierbar gelagert. Ein nicht-einschränkendes Beispiel für ein Bauwerk ist eine Windenergieanlage, und ein ebenfalls nicht-einschränkendes Beispiel für eine Struktur 110 der Windenergieanlage ist ein Rotorblatt.

Ein Beschleunigungssensor 10 ist derart angeordnet und derart konfiguriert, dass er eine Beschleunigung an der Struktur 110 erfasst. Beispielsweise ist der Beschleunigungssensor 10 in einem Rotorblatt oder an einem Rotorblatt einer Windenergieanlage angeordnet. Typischerweise erfasst der Beschleunigungssensor 10 die Beschleunigung zeitlich fortlaufend und gibt die Beschleunigung zeitlich fortlaufend aus, beispielsweise als einen Datenstrom von zeitlich äquidistanten Abtastwerten. Der Beschleunigungssensor 10 führt die erfasste Beschleunigung als Beschleunigungssignal 15 einer Auswerteeinrichtung 30 zu.

Das Beschleunigungssignal 15 wird der Auswerteeinrichtung 30 über ein geeignetes Medium zugeführt; als nicht-einschränkende Beispiele werden eine elektrische Leitung, eine optische Leitung oder eine drahtlose Übertragung genannt.

Es kann auch vorgesehen sein, dass der Beschleunigungssensor 10 Beschleunigungen in mehreren Achsrichtungen misst, beispielsweise in zwei Achsrichtungen oder in drei Achsrichtungen. Die Offenbarung ist außerdem nicht auf einen einzelnen Beschleunigungssensor 10 beschränkt, und es können auch zwei oder mehr Beschleunigungssensoren an der Struktur 110 vorgesehen sein, typischerweise an unterschiedlichen Orten an oder in der Struktur 110.

Die Auswerteeinrichtung 30 ist dazu konfiguriert, aus der erfassten Beschleunigung (aus dem Beschleunigungssignal 15) eine Eigenfrequenz der Struktur 110 oder mehrere Eigenfrequenzen der Struktur 110 zu ermitteln. Die Auswerteeinrichtung ist ferner dazu konfiguriert, eine Anlagerung von Eis an der Struktur anhand der ermittelten mindestens einen Eigenfrequenz der Struktur 110 indirekt zu detektieren.

Zum Ermitteln der mindestens einen Eigenfrequenz ist die Auswerteeinrichtung 30 beispielsweise dazu konfiguriert, einen Messwertverlauf des Beschleunigungssensors in den Frequenzbereich zu transformieren, beispielsweise durch eine Fouriertransformation oder eine andere geeignete Integraltransformation. Eine Eigenfrequenz der Struktur 110 kann sich beispielsweise als eine Frequenzüberhöhung (ein Peak) in dem transformierten Signal zeigen. Die Offenbarung ist nicht auf eine einzige Eigenfrequenz beschränkt, und es können auch mehrere Eigenfrequenzen der Struktur 110 für die indirekte Detektion herangezogen werden.

Es sei hier angemerkt, dass nicht notwendigerweise eine räumliche oder technische Trennung zwischen der Auswerteeinrichtung 30 und dem Beschleunigungssensor 10 vorliegen muss; vielmehr können auch die Auswerteeinrichtung 30 und der mindestens eine Beschleunigungssensor 10 integriert ausgebildet sein.

Unter einem indirekten Detektieren, wie hierin verwendet, wird verstanden, dass aus einer Größe, die mittelbar mit einer Eisanlagerung zusammenhängt, auf das Vorliegen oder Nichtvorliegen einer Eisanlagerung geschlossen wird. Im Ausführungsbeispiel wird anhand der Eigenfrequenz der Struktur 110, die sich bei veränderter Masse der Struktur 110 ändert, indirekt darauf geschlossen, dass die veränderte Eigenfrequenz einen Hinweis auf eine Eisanlagerung an der Struktur 110 gibt.

Außerdem ist ein Eis-Detektionssensor 20 derart angeordnet und derart konfiguriert, dass er die Anlagerung von Eis an einer Position an der Struktur 110 direkt detektiert. Ein direktes Detektieren, wie hierin verwendet, umfasst eine Messung einer Größe, die unmittelbar eine Eisanlagerung angibt. Bei Ausführungsformen ist der Eis-Detektionssensor 20 zum direkten Detektieren aus der Gruppe ausgewählt, welche umfasst: Einen Impedanzsensor, einen elektrischen Widerstandssensor, einen Ultraschallsensor, einen optischen Sensor zur Messung einer Lichtintensität oder einer Licht-Intensitätsänderung, einen optischen Sensor zur Messung einer Licht-Wellenlänge oder einer Licht-Wellenlängenänderung, einen Faser-Bragg-Gitter-Sensor.

Der Eis-Detektionssensor 20 detektiert die Anlagerung von Eis typischerweise an einer Position an der Struktur 110 in einem räumlich begrenzten Detektionsbereich. Beispielsweise ist der Eis-Detektionssensor 20 dazu ausgebildet, die Anlagerung von Eis direkt in einem Detektionsradius von 1 m oder 50 cm im Bereich der Position an der Struktur 110 direkt zu detektieren.

Der Eis-Detektionssensor 20 gibt ein Eis-Detektionssignal 25 aus, welches der Auswertungseinrichtung 30 zugeführt wird. Das Eis-Detektionssignal 25 wird der Auswerteeinrichtung 30 über ein geeignetes Medium zugeführt; als nicht-einschränkende Beispiele werden eine elektrische Leitung, eine optische Leitung oder eine drahtlose Übertragung genannt. Das Eis-Detektionssignal 25 ist beispielsweise ein binäres Signal, das das Vorliegen oder das Nicht-Vorliegen von angelagertem Eis angibt. Das Eis-Detektionssignal 25 kann auch ein Signal sein, das mehr als zwei Werte annehmen kann. Beispielsweise kann das Eis-Detektionssignal einen geeignet codierten Wert für die Eisdicke oder die Eismenge an der Position an der Struktur bzw. in dem Detektionsbereich an der Position der Struktur 110 angeben.

Die Auswertungseinrichtung 30 ist dazu konfiguriert, das indirekte Detektieren der Anlagerung von Eis und das direkte Detektieren der Anlagerung von Eis zu kombinieren. Die Auswertungseinrichtung 30 kombiniert typischerweise ein indirektes Detektionsergebnis, das aus der hierin beschriebenen Auswertung der ermittelten mindestens einen Eigenfrequenz abgeleitet ist, mit einem direkten Detektionsergebnis, das aus dem Eis-Detektionssignal 25 abgeleitet ist.

Das indirekte Detektionsergebnis beruht auf der Auswertung einer Eigenfrequenz oder von Eigenfrequenzen der Struktur 110. Dadurch werden prinzipiell mit einer geringen Anzahl von Beschleunigungssensoren 10 große bzw. weitläufige Bereiche der Struktur 110 in die Detektion einbezogen. Die Masseänderung bei Eisansatz an der Struktur 110 kann jedoch gering sein. Insbesondere hat ein Rotorblatt einer Windenergieanlage eine Masse, die im Verhältnis zu der Masse von angelagertem Eis in manchen Fällen sehr groß ist. Außerdem kann es Bereiche an der Struktur geben, bei welchen eine Eisanlagerung nur eine geringe Auswirkung auf die Eigenfrequenz oder die Eigenfrequenzen hat, beispielsweise im Bereich der Blattwurzel eines Rotorblattes einer Windenergieanlage. Die Detektionsgenauigkeit oder die Auflösung der indirekten Detektion kann daher fallbezogen begrenzt sein.

Durch die Kombination von indirektem und direktem Detektionsergebnis kann die Detektionsgenauigkeit oder die Zuverlässigkeit oder die Auflösung der Vorrichtung zum Erkennen der Anlagerung von Eis, wie hierin beschrieben, verbessert werden. Außerdem kann das direkte Detektionsergebnis auch ermittelt werden, wenn in einem Zeitraum an der Struktur 110 keine Beschleunigungen auftreten und somit keine Eigenfrequenzen ermittelt werden können, beispielsweise bei Stillstand des Rotorblattes einer Windenergieanlage.

Bei Ausführungsformen umfasst das indirekte Detektieren der Anlagerung von Eis an der Struktur 110 ein Vergleichen der ermittelten mindestens einen Eigenfrequenz mit mindestens einer Referenz-Eigenfrequenz, und ein Ermitteln einer Verschiebung zwischen der ermittelten mindestens einen Eigenfrequenz und der mindestens einen Referenz-Eigenfrequenz.

Die Referenz-Eigenfrequenz ist beispielsweise ein Grundwert für eine Eigenfrequenz der Struktur 110 im eisansatzfreien Zustand. Der Grundwert kann beispielsweise durch eine Referenzmessung der Eigenfrequenz im eisansatzfreien Zustand oder durch eine Simulation ermittelt werden. Die Verschiebung zwischen der ermittelten Eigenfrequenz und der Referenz-Eigenfrequenz ist beispielsweise eine Verschiebung zwischen der ermittelten Eigenfrequenz und dem Grundwert.

Bei Ausführungsformen umfasst das Kombinieren von indirektem Detektieren der Anlagerung von Eis und von direktem Detektieren der Anlagerung von Eis ein Bestimmen, beim indirekten Detektieren, dass eine Anlagerung von Eis vorliegt, wenn die Verschiebung zwischen der ermittelten mindestens einen Eigenfrequenz und der mindestens einen Referenz-Eigenfrequenz einen vorab festgelegten oder festlegbaren Verschiebungs-Schwellenwert überschreitet, und ein Bestimmen, beim direkten Detektieren, dass eine Anlagerung von Eis vorliegt, wenn ein Detektionswert für die Anlagerung von Eis einen vorab festgelegten oder festlegbaren Eisdicken-Schwellenwert überschreitet.

Der vorab festgelegte oder festlegbare Verschiebungs-Schwellenwert kann beispielsweise eine äquivalente Verschiebung sein, bei welcher bestimmt wird, dass eine bestimmte Massenänderung oder Massenzunahme erfolgt ist. Eine Massenzunahme kann beispielsweise mindestens 50 kg oder mindestens 20 kg betragen.

Der vorab festgelegte oder festlegbare Eisdicken-Schwellenwert kann beispielsweise eine äquivalente Eismenge oder eine äquivalente Eisdicke sein, bei welcher bestimmt wird, dass eine bestimmte Massenzunahme erfolgt ist.

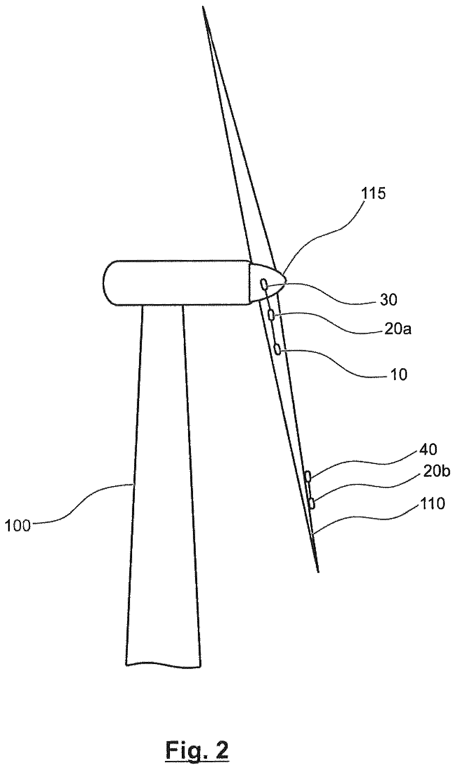

Fig. 2 zeigt eine schematische Darstellung einer Windkraftanlage, bei welcher die Vorrichtung gemäß einer der hierin beschriebenen Ausführungsformen zum Einsatz kommen kann.

Bei Ausführungsformen ist es vorgesehen, dass der mindestens eine Eis-Detektionssensor 20a, 20b an einer oder mehreren Positionen aus der Gruppe angeordnet ist, welche umfasst: Den Bereich der Rotorblatt-Vorderkante eines Rotorblattes einer Windenergieanlage, den Bereich der Rotorblattspitze eines Rotorblattes einer Windenergieanlage, den Bereich der Rotorblattwurzel eines Rotorblattes einer Windenergieanlage. Die Offenbarung ist nicht auf die genannten Positionen beschränkt, und es kann vorgesehen sein, dass einzelne oder sämtliche der Eis-Detektionssensoren 20a, 20b an Positionen angeordnet bzw. befestigt ist, welche sich von den genannten Positionen unterscheiden.

Die Rotorblatt-Vorderkante gehört zu den Bereichen, an welchen sich besonders schnell Eis anlagert, da hier direkt die kalte feuchte Luft auf das Blatt stößt. Auch an der Rotorblattwurzel bildet sich schnell Eis. Der Eisansatz bildet sich zudem umso schneller, je näher die Position an der Rotorblattspitze befindet, da sich hier das Blatt am schnellsten bewegt.

Es kann sein, dass in diesen Bereichen bereits für den Betrieb der Windenergieanlage bedeutsame Eisanlagerungen vorliegen, wenn die Detektionsgenauigkeit bzw. Auflösung der indirekten Detektion noch nicht ausreichen, um diese angelagerten Eismengen zu erkennen. Dadurch, dass einer oder mehrere Eis-Detektionssensoren 20a, 20b an den genannten Bereichen vorgesehen ist bzw. sind, kann die Detektionsgenauigkeit der Vorrichtung verbessert werden.

Bei der Ausführungsform gemäß Fig. 2 ist ein Eis-Detektionssensor 20a im Bereich der Blattwurzel vorgesehen und im Rotorblatt angeordnet. Ein weiterer Eis-Detektionssensor 20b ist im Bereich der Rotorblattspitze an einer Rotorblatt-Vorderkante vorgesehen und in der dargestellten Ausführungsform im Bereich der Rotorblattspitze auf das Rotorblatt aufgeklebt. Die Offenbarung ist jedoch nicht auf zwei Eis-Detektionssensoren 20a, 20b beschränkt, und es kann auch nur ein Eis-Detektionssensor 20 vorgesehen sein, oder es können mehr als zwei Eis-Detektionssensoren 20a, 20b vorgesehen sein. Typischerweise sind mehr als zehn oder mehr als fünfzehn Eis-Detektionssensoren an einer Struktur 110 vorgesehen.

Bei Ausführungsformen ist es vorgesehen, dass der mindestens eine Beschleunigungssensor 10 und/oder der mindestens eine Eis-Detektionssensor 20, 20a, 20b dazu konfiguriert ist bzw. sind, die erfasste Beschleunigung bzw. das direkte Detektionsergebnis drahtlos der Auswerteeinrichtung 30 zuzuführen.

Bei der in Fig. 2 dargestellten Ausführungsform sind der Beschleunigungssensor 10 sowie der Eis-Detektionssensor 20a im Bereich der Rotorblattwurzel mittels einer drahtgebundenen Leitung mit der Auswerteeinrichtung 30 verbunden. Drahtgebunden umfasst, wie hierin verwendet, eine elektrische Verbindung und/oder eine optische, beispielsweise faseroptische, Verbindung. Der Eis-Detektionssensor 20b im Bereich der Rotorblattspitze ist dazu konfiguriert, das direkte Detektionsergebnis drahtlos an die Auswerteeinrichtung 30 zu übermitteln. Dadurch ist die Flexibilität erhöht, und der Eis-Detektionssensor 20b im Bereich der Rotorblattspitze kann auf einfache Weise an der Rotorblattspitze installiert werden, ohne zusätzliche Datenleitungen bzw. Signalleitungen vorzusehen.

Bei Ausführungsformen ist es vorgesehen, dass der mindestens eine Beschleunigungssensor 10 und/oder der mindestens eine Eis-Detektionssensor 20, 20a, 20b eine Energy-Harvesting-Einrichtung 40 aufweist bzw. aufweisen. Bei der in Fig. 2 dargestellten Ausführungsform weist beispielsweise der Detektionssensor 20b im Bereich der Rotorblattspitze eine Energy-Harvesting-Einrichtung 40 auf, welche dazu konfiguriert ist, den Detektionssensor 20b mit Energie zum Durchführen der direkten Detektion und zum Durchführen der Übermittlung des Detektionsergebnisses an die Auswerteeinrichtung 30 zu versorgen. Die Offenbarung ist nicht auf eine einzelne Energy-Harvesting-Einrichtung 40 pro Sensor beschränkt, und ein Sensor 20, 20a, 20b kann auch von mehreren Energy-Harvesting-Einrichtungen 40 mit Energie versorgt werden. Dadurch ist die Flexibilität erhöht, und der Eis-Detektionssensor 20b im Bereich der Rotorblattspitze kann auf einfache Weise an der Rotorblattspitze installiert werden, ohne zusätzliche Energie-Versorgungsleitungen vorzusehen.

Bei Ausführungsformen ist vorgesehen, dass die Vorrichtung ferner eine Warneinrichtung 50 (siehe Fig. 1) umfasst. Die Warneinrichtung 50 ist dazu konfiguriert, eine Eiswarnmeldung auszugeben, wenn bestimmt wird, dass eine Anlagerung von Eis vorliegt. Alternativ oder zusätzlich ist die Warneinrichtung 50 dazu konfiguriert, eine Eisfreimeldung auszugeben, wenn bestimmt wird, dass eine Anlagerung von Eis nicht vorliegt. Beispielsweise wird der Warneinrichtung 50 das Auswertungssignal 35 aus der Auswerteeinrichtung 30 zugeführt. Die Warneinrichtung 50 gibt die Eiswarnmeldung oder die Eisfreimeldung als ein Warnsignal 55 aus.

Es ist denkbar, das Warnsignal 55 zur Verwendung in einer Anlagensteuerung für eine Windenergieanlage zu verwenden. Beispielsweise ist kann die Windenergieanlage bei Vorliegen einer Eiswarnmeldung angehalten oder gebremst bzw. gedrosselt werden. Die Windenergieanlage kann auch bei Vorliegen einer Eisfreimeldung wieder freigegeben bzw. wieder angefahren werden. Dadurch, dass ein direktes und ein indirektes Detektieren kombiniert werden, kann eine Eisfreimeldung auch bei stillstehender Anlage erhalten werden, bei welcher die indirekte Detektion nicht oder nur eingeschränkt funktioniert.

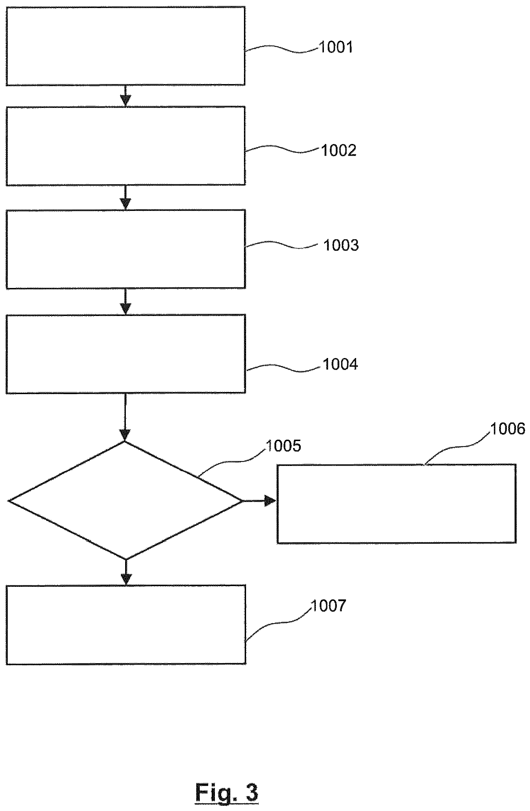

Fig. 3 zeigt ein Ablaufdiagramm eines Verfahrens zum Erkennen der Anlagerung von Eis an einer Struktur 110 eines Bauwerks gemäß einer Ausführungsform. Die Struktur 110 ist beispielsweise ein Rotorblatt einer Windenergieanlage.

In einem Schritt 1001 wird eine Beschleunigung an der Struktur 110 erfasst. In einem nachfolgenden Schritt 1002 wird mindestens eine Eigenfrequenz der Struktur 110 aus der erfassten Beschleunigung ermittelt. In einem darauffolgenden Schritt 1003 wird eine Anlagerung von Eis an der Struktur 110 anhand der ermittelten mindestens einen Eigenfrequenz der Struktur 110 indirekt detektiert. In einem anschließenden Schritt 1004 wird eine Anlagerung von Eis an einer Position an der Struktur 110 direkt detektiert.

In einem Schritt 1005 wird anschließend bestimmt, ob oder ob nicht eine Eisanlagerung vorliegt, und zwar aus einer Kombination des direkten Detektionsergebnisses und des indirekten Detektionsergebnisses. Wenn in Schritt 1005 bestimmt wird, dass eine Eisanlagerung vorliegt, wird mit Schritt 1006 fortgefahren. Wenn in Schritt 1005 bestimmt wird, dass eine Eisanlagerung nicht vorliegt, wird mit Schritt 1007 fortgefahren.

In Schritt 1006 wird als Ergebnis der Auswertung ein Auswertungssignal ausgegeben, das eine Eiswarnmeldung anzeigt.

In Schritt 1007 wird als Ergebnis der Auswertung ein Auswertungssignal ausgegeben, das eine Eisfreimeldung anzeigt.

Es kann vorgesehen sein, dass das Verfahren im Anschluss an den Schritt 1006 oder an den Schritt 1007 wiederholt wird, beispielsweise ständig wiederholt wird.

Die Reihenfolge der Schritte 1001, 1002, 1003 zum Durchführen der indirekten Detektion einerseits im Verhältnis zu dem Schritt 1004 zum Durchführen der direkten Detektion andererseits ist nicht auf dieses Beispiel beschränkt, und es kann auch genauso gut vorgesehen sein, dass der Schritt 1004 zum Durchführen der direkten Detektion vor den Schritten 1001, 1002, 1003 zum Durchführen der indirekten Detektion durchgeführt wird, oder dass die Schritte 1001, 1002, 1003 zum Durchführen der indirekten Detektion gleichzeitig mit dem Schritt 1004 zum Durchführen der direkten Detektion durchgeführt werden.

Es sei an dieser Stelle darauf hingewiesen, dass die hierin beschriebenen Aspekte und Ausführungsformen angemessen miteinander kombinierbar sind, und dass einzelne Aspekte dort weggelassen werden können, wo es im Rahmen des fachmännischen Handelns sinnvoll und möglich ist. Abwandlungen und Ergänzungen der hierin beschriebenen Aspekte sind dem Fachmann geläufig.

## Patentansprüche

1. Vorrichtung zum Erkennen der Anlagerung von Eis an einer Struktur (110) eines Bauwerks (100), wobei die Vorrichtung umfasst:
mindestens einen Beschleunigungssensor (10), der angeordnet und konfiguriert ist zum Erfassen einer Beschleunigung an der Struktur;
eine Auswerteeinrichtung (30) zum Ermitteln mindestens einer Eigenfrequenz der Struktur (110) aus der erfassten Beschleunigung, wobei die Auswerteeinrichtung (30) zum indirekten Detektieren einer Anlagerung von Eis an der Struktur (110) anhand der ermittelten mindestens einen Eigenfrequenz der Struktur (110) konfiguriert ist;
mindestens einen Eis-Detektionssensor (20, 20a, 20b), der angeordnet und konfiguriert ist zum direkten Detektieren der Anlagerung von Eis an einer Position an der Struktur (110),
dadurch kekennzeichnet, dass die Auswerteinrichtung (30) das indirekte Detektieren der Anlagerung von Eis und das direkte Detektieren der Anlagerung von Eis kombiniert.

2. Vorrichtung nach Anspruch 1, wobei das indirekte Detektieren der Anlagerung von Eis an der Struktur (110) umfasst:
Vergleichen der ermittelten mindestens einen Eigenfrequenz mit mindestens einer Referenz-Eigenfrequenz;
Ermitteln einer Verschiebung zwischen der ermittelten mindestens einen Eigenfrequenz und der mindestens einen Referenz-Eigenfrequenz.

3. Vorrichtung nach Anspruch 2, wobei das Kombinieren von indirektem Detektieren der Anlagerung von Eis und von direktem Detektieren der Anlagerung von Eis umfasst:
Bestimmen, beim indirekten Detektieren, dass eine Anlagerung von Eis vorliegt, wenn die Verschiebung zwischen der ermittelten mindestens einen Eigenfrequenz und der mindestens einen Referenz-Eigenfrequenz einen vorab festgelegten oder festlegbaren Verschiebungs-Schwellenwert überschreitet;
Bestimmen, beim direkten Detektieren, dass eine Anlagerung von Eis vorliegt, wenn ein Detektionswert für die Anlagerung von Eis einen vorab festgelegten oder
festlegbaren Eisdicken-Schwellenwert überschreitet.

4. Vorrichtung nach einem der vorhergehenden Ansprüche, wobei der mindestens eine Eis-Detektionssensor (20, 20a, 20b) aus der folgenden Gruppe ausgewählt ist:
Impedanzsensor, elektrischer Widerstandssensor, Ultraschallsensor, optischer Sensor zur Messung einer Lichtintensität oder Licht-Intensitätsänderung, optischer Sensor zur Messung einer Licht-Wellenlänge oder Licht-Wellenlängenänderung, Faser-Bragg-Gitter-Sensor.

5. Vorrichtung nach einem der vorhergehenden Ansprüche, wobei die Struktur (110) ein Rotorblatt einer Windenergieanlage ist.

6. Vorrichtung nach Anspruch 5, wobei der mindestens eine Eis-Detektionssensor (20, 20a, 20b) an einer oder mehreren der folgenden Positionen angeordnet ist: Bereich der Rotorblatt-Vorderkante, Bereich der Rotorblattspitze, Bereich der Rotorblattwurzel.

7. Vorrichtung nach einem der vorhergehenden Ansprüche, wobei der mindestens eine Beschleunigungssensor (10) und/oder der mindestens eine Eis-Detektionssensor (20, 20a, 20b) dazu konfiguriert ist bzw. sind, die erfasste Beschleunigung bzw. das Detektionsergebnis drahtlos der Auswertungseinrichtung (30) zuzuführen.

8. Vorrichtung nach einem der vorhergehenden Ansprüche, wobei der mindestens eine Beschleunigungssensor (10) und/oder der mindestens eine Eis-Detektionssensor (20, 20a, 20b) mindestens eine Energy-Harvesting-Einrichtung (40) aufweist bzw. aufweisen.

9. Vorrichtung nach einem der vorhergehenden Ansprüche, die ferner eine Warneinrichtung (50) umfasst, wobei die Warneinrichtung (50) dazu konfiguriert ist, eine Eiswarnmeldung auszugeben, wenn bestimmt wird, dass eine Anlagerung von Eis vorliegt, und/oder wobei die Warneinrichtung dazu konfiguriert ist, eine Eisfreimeldung auszugeben, wenn bestimmt wird, dass eine Anlagerung von Eis nicht vorliegt.

10. Verfahren zum Erkennen der Anlagerung von Eis an einer Struktur (110) eines Bauwerks (100), wobei das Verfahren umfasst:
Erfassen einer Beschleunigung an der Struktur (110);
Ermitteln mindestens einer Eigenfrequenz der Struktur (110) aus der erfassten Beschleunigung;
indirektes Detektieren einer Anlagerung von Eis an der Struktur (110) anhand der ermittelten mindestens einen Eigenfrequenz der Struktur;
direktes Detektieren der Anlagerung von Eis an einer Position an der Struktur (110);
Bestimmen, ob oder ob nicht eine Eisanlagerung vorliegt, aus einer Kombination des direkten Detektionsergebnisses und des indirekten Detektionsergebnisses.

## Claims

1. A device for recognising the attachment of ice to a structure (110) of a construction (100), the device comprising:
at least one acceleration sensor (10) which is arranged and configured to sense an acceleration at the structure;
an evaluation apparatus (30) for determining at least one natural frequency of the structure (110) from the sensed acceleration, wherein the evaluation apparatus (30) is configured to indirectly detect an attachment of ice to the structure (110) on the basis of the determined at least one natural frequency of the structure (110);
at least one ice detection sensor (20, 20a, 20b) which is arranged and configured to directly detect the attachment of ice in a position on the structure (110),
**characterised in that**
the evaluation apparatus (30) combines the indirect detecting of the attachment of ice and the direct detecting of the attachment of ice.

2. The device according to claim 1, wherein the indirect detecting of the attachment of ice to the structure (110) comprises:
comparing the determined at least one natural frequency to at least one reference natural frequency;
determining a shift between the determined at least one natural frequency and the at least one reference natural frequency.

3. The device according to claim 2, wherein the combining of the indirect detecting of the attachment of ice and of the direct detecting of the attachment of ice comprises:
determining, when indirectly detecting, that an attachment of ice is present if the shift between the determined at least one natural frequency and the at least one reference natural frequency exceeds a previously defined or definable shift threshold value;
determining, when directly detecting, that an attachment of ice is present if a detection value for the attachment of ice exceeds a previously defined or definable ice thickness threshold value.

4. The device according to any one of the preceding claims, wherein the at least one ice detection sensor (20, 20a, 20b) is selected from the following group:
an impedance sensor, an electrical resistance sensor, an ultrasonic sensor, an optical sensor for measuring a light intensity or a change in light intensity, an optical sensor for measuring a light wavelength or a change in light wavelength, a fibre Bragg grating sensor.

5. The device according to any one of the preceding claims, wherein the structure (110) is a rotor blade of a wind turbine.

6. The device according to claim 5, wherein the at least one ice detection sensor (20, 20a, 20b) is arranged in one or more of the following positions: an area of the rotor blade leading edge, an area of the rotor blade tip, an area of the rotor blade root.

7. The device according to any one of the preceding claims, wherein the at least one acceleration sensor (10) and/or the at least one ice detection sensor (20, 20a, 20b) is or are configured to wirelessly feed the sensed acceleration or the detection result to the evaluation apparatus (30).

8. The device according to any one of the preceding claims, wherein the at least one acceleration sensor (10) and/or the at least one ice detection sensor (20, 20a, 20b) has or have at least an energy harvesting apparatus (40).

9. The device according to any one of the preceding claims, further comprising a warning apparatus (50), wherein the warning apparatus (50) is configured to output an ice warning message if it is determined that an attachment of ice is present, and/or wherein the warning apparatus is configured to output a free-of-ice message if it is determined that an attachment of ice is not present.

10. A method for recognising the attachment of ice to a structure (110) of a construction (100), the method comprising:
sensing an acceleration at the structure (110);
determining at least one natural frequency of the structure (110) from the sensed acceleration;
indirectly detecting an attachment of ice to the structure (110) on the basis of the determined at least one natural frequency of the structure;
directly detecting the attachment of ice in a position on the structure (110);
determining, from a combination of the direct detection result and the indirect detection result, whether or not an ice attachment is present.

## Revendications

1. Dispositif de détection de l'accumulation de glace à une structure (110) d'un ouvrage de construction (100), dans lequel le dispositif comprend :
au moins un capteur d'accélération (10) agencé et configuré pour détecter une accélération au niveau de la structure ;
un dispositif d'évaluation (30) pour déterminer au moins une fréquence propre de la structure (110) à partir de l'accélération détectée, dans lequel le dispositif d'évaluation (30) est configuré pour détecter indirectement une accumulation de glace à la structure (110) sur la base de l'au moins une fréquence propre déterminée de la structure (110) ;
au moins un capteur de détection de glace (20, 20a, 20b) agencé et configuré pour détecter directement l'accumulation de glace à une position à la structure (110),
**caractérisé en ce que**
le dispositif d'évaluation (30) combine la détection indirecte de l'accumulation de glace et la détection directe de l'accumulation de glace.

2. Dispositif selon la revendication 1, dans lequel la détection indirecte de l'accumulation de glace à la structure (110) comprend :
la comparaison de l'au moins une fréquence propre déterminée avec au moins une fréquence propre de référence ;
la détermination d'un décalage entre l'au moins une fréquence propre déterminée et l'au moins une fréquence propre de référence.

3. Dispositif selon la revendication 2, dans lequel la combinaison de la détection indirecte de l'accumulation de glace et de la détection directe de l'accumulation de glace comprend :
la détermination, lors d'une détection indirecte, qu'il existe une accumulation de glace si le décalage entre l'au moins une fréquence propre déterminée et l'au moins une fréquence propre de référence dépasse une valeur seuil de déplacement prédéfinie ou définissable ;
la détermination, lors d'une détection directe, qu'il existe une accumulation de glace si une valeur de détection d'accumulation de glace dépasse un seuil d'épaisseur de glace prédéfini ou définissable.

4. Dispositif selon l'une des revendications précédentes, dans lequel l'au moins un capteur de détection de glace (20, 20a, 20b) est choisi dans le groupe suivant :
capteur d'impédance, capteur de résistance électrique, capteur à ultrasons, capteur optique pour mesurer une intensité lumineuse ou un changement d'intensité lumineuse, capteur optique pour mesurer une longueur d'onde lumineuse ou un changement de longueur d'onde lumineuse, capteur à réseau de Bragg à fibre.

5. Dispositif selon l'une des revendications précédentes, dans lequel la structure (110) est une pale de rotor d'éolienne.

6. Dispositif selon la revendication 5, dans lequel l'au moins un capteur de détection de glace (20, 20a, 20b) est disposé dans une ou plusieurs des positions suivantes : zone du bord d'attaque de pale de rotor, zone de la pointe de pale de rotor, zone du pied de pale de rotor.

7. Dispositif selon l'une des revendications précédentes, dans lequel l'au moins un capteur d'accélération (10) et/ou l'au moins un capteur de détection de glace (20, 20a, 20b) est ou sont configurés pour transmettre sans fil l'accélération détectée ou le résultat de la détection au dispositif d'évaluation (30).

8. Dispositif selon l'une des revendications précédentes, dans lequel l'au moins un capteur d'accélération (10) et/ou l'au moins un capteur de détection de glace (20, 20a, 20b) présente(nt) au moins un dispositif de récupération d'énergie (40) .

9. Dispositif selon l'une des revendications précédentes, comprenant en outre un dispositif d'avertissement (50), dans lequel le dispositif d'avertissement (50) est configuré pour émettre un message d'avertissement de glace lorsqu'il est déterminé qu'il existe une accumulation de glace et/ou dans lequel le dispositif d'avertissement est configuré pour émettre un rapport de déglaçage s'il est déterminé qu'il n'existe pas d'accumulation de glace.

10. Procédé de détection de l'accumulation de glace à une structure (110) d'un ouvrage de construction (100), dans lequel le procédé comprend :
la détection d'une accélération à la structure (110) ;
la détermination d'au moins une fréquence propre de la structure (110) à partir de l'accélération détectée ;
la détection indirecte d'une accumulation de glace à la structure (110) sur la base de l'au moins une fréquence propre déterminée de la structure ;
la détection directe de l'accumulation de glace à une position à la structure (110) ;
la détermination de la question de savoir s'il existe ou non une accumulation de glace à partir d'une combinaison du résultat de détection directe et du résultat de détection indirecte.
